# EUROPÄISCHE PATENTSCHRIFT

(11) **EP 1 644 708 B1**
(45) Veröffentlichungstag und Bekanntmachung des Hinweises auf die Patenterteilung: **12.04.2017**
(21) Anmeldenummer: 04740770.5
(22) Anmeldetag: 08.07.2004
(51) Int. Cl.: G01N 9/00, G01F 23/296

(54) **FELDGERÄT ZUR BESTIMMUNG UND/ODER BERWACHUNG EINER PROZESSGRÖSSE**
FIELD DEVICE FOR THE DETERMINATION AND/OR MONITORING OF A PROCESS PARAMETER
APPAREIL DE CHAMP POUR DETERMINER ET/OU SURVEILLER UNE VARIABLE DE PROCESSUS

(30) Priorität: 11.07.2003 DE 10331730
(43) Veröffentlichungstag der Anmeldung: 12.04.2006
(73) Patentinhaber: Endress + Hauser GmbH + Co. KG, 79689 Maulburg (DE)
(72) Erfinder: LOPATIN, Sergej, 79540 Lörrach (DE); PFEIFFER, Helmut, 79585 Steinenj (DE)
(74) Vertreter: Andres, Angelika Maria
(86) Internationale Anmeldenummer: PCT/EP2004/007462
(87) Internationale Veröffentlichungsnummer: WO 2005/008190

(56) Entgegenhaltungen:
- EP-A- 0 499 265
- US-A- 3 225 226
- US-A- 4 742 260
- US-A- 5 099 454
- US-A- 5 651 285

## Beschreibung

Die Erfindung bezieht sich auf ein Feldgerät zur Bestimmung und/oder Überwachung mindestens einer Prozessgröße eines Mediums in einem Behälter, mit mindestens einer mechanisch schwingfähigen Einheit, wobei die mechanisch schwingfähige Einheit über einen Prozessanschluss mit dem Behälter verbunden ist, und mit mindestens einer Antriebs-/Empfangseinheit, wobei die Antriebs-/Empfangseinheit die mechanisch schwingfähige Einheit zu Schwingungen anregt, bzw. wobei die Antriebs-/Empfangseinheit die Schwingungen der mechanisch schwingfähigen Einheit detektiert. Bei der Prozessgröße kann es sich beispielsweise um den Füllstand, die Dichte oder die Viskosität eines Mediums handeln.

Das Prinzip eines solchen Feldgerätes besteht darin, dass die Schwingung einer schwingfähigen Einheit davon abhängt, ob sie frei oder durch das Medium bedeckt schwingt - dies ist dann die Füllstandbestimmung - oder ob sich beispielsweise die Viskosität des Mediums ändert - dies ist dann z.B. eine Überwachung der Viskosität. Je nach Eigenschaft des Mediums oder generell ob Medium die schwingfähige Einheit bedeckt oder nicht, unterscheiden sich die Frequenzen und Amplituden der Schwingungen. Der Rückschluss aus einer Frequenzänderung erlaubt also beispielsweise bei der Verwendung als Füllstandssensor die Aussage, dass das Medium einen bestimmten Füllstand, der durch die Einbauposition bestimmt ist, über- oder unterschreitet. Gleiches gilt auch für die Amplitude.

Von der Anmelderin werden unter der Bezeichnung "Liquiphant" Schwinggabeln z.B. zur Füllstandsdetektion produziert und vertrieben. Der Vorteil der Schwinggabeln liegt darin, dass sich die Schwingungen der beiden Gabelzinken gerade kompensieren, so dass z.B. von der Schwinggabel keine Energie auf den Einspannungsbereich übertragen wird, auf den Bereich also, an dem das Messgerät mit dem Behälter verbunden wird und in ihn hineinreicht. Für Anwendungsbereiche, bei denen sich beispielsweise Material zwischen den Zinken verklemmen kann, ist es interessant, sog. Einstäbe zu benutzten. Bei diesen fehlt die selbständige Kompensation der Kräfte und somit können Kräfte und Momente auf die Einspannung wirken.

In der Offenlegungsschrift EP0499265 A ist ein so genannter Einstab mit einem rohrförmigen schwingfähigen Element zur Bestimmung oder Überwachung eines Füllstands eines Mediums in einem Behälter beschrieben. Das schwingfähige Element ist mit einem Endbereich an einer Behälterwand befestigbar, sodass der andere geschlossene Endbereich in ein Inneres des Behälters hineinragt und frei schwingen kann. In dem Inneren des schwingfähigen Elements befindet sich ein weiteres schwingfähiges Element, welches an dem freien Endbereich befestigt ist und Mittel zur Anregung und Detektion mechanischer Schwingungen ausweist. 5

Somit ist es Aufgabe der Erfindung, eine mechanisch schwingfähige Einheit eines Feldgerätes vorzustellen, deren Schwingungen möglichst keine Kräfte und Momente auf die Einspannung erzeugen.

Die Aufgabe wird erfindungsgemäß durch Anspruch 1 gelöst.

Anspruch 1 beinhaltet ein Feldgerät zur Bestimmung und/oder Überwachung mindestens einer Prozessgröße eines Mediums in einem Behälter, mit mindestens einer mechanisch schwingfähigen Einheit, wobei die mechanisch schwingfähige Einheit über einen Prozessanschluss mit dem Behälter verbindbar ist und mit mindestens einer Antriebs-/Empfangseinheit, wobei die Antriebs-/Empfangseinheit die mechanisch schwingfähige Einheit zu Schwingungen anregt, bzw. wobei die Antriebs-/Empfangseinheit die Schwingungen der mechanisch schwingfähigen Einheit detektiert.

Die Erfindung ist dadurch gekennzeichnet, dass die mechanisch schwingfähige Einheit mindestens drei Schwingkörper aufweist, dass mindestens ein Schwingkörper an einem Einspannbereich mit dem Prozessanschluss verbunden ist, und dass die drei Schwingkörper Schwingungen ausführen, die die Antriebs-/Empfangseinheit erzeugt bzw. detektiert Die Ausgestaltung der Schwingkörper ist dabei stab- oder röhrenförmig.

Die Erfindung beinhaltet also, dass die mechanisch schwingfähige Einheit sich aus drei Schwingkörpern zusammensetzt. Zwei davon sind mit dem dritten Schwingkörper verbunden. Dies führt dazu, dass dementsprechend auch die Schwingungen miteinander direkt z.B. zwischen jeweils paarweise miteinander verbundenen Schwingkörpern bzw. indirekt gekoppelt sind. Somit werden auch Kräfte und Momente untereinander übertragen. Die Schwingkörper können aus gleichem oder unterschiedlichem Material bestehen, z.B. Metall oder Plastik. Wesentlich sind die für die Schwingung relevanten physikalischen Größen wie Steifigkeit und Masse. Bezüglich der Schwingfrequenz und der Amplitude ist natürlich weiterhin die Länge relevant. Die Abstimmung der Längen sollte natürlich so sein, dass sich die Schwingungen nicht gegenseitig behindern.

Die Erfindung beinhaltet, dass es sich bei den Schwingungen der mechanisch schwingfähigen Einheit um Biegeschwingungen handelt. Alternative Bezeichnungen für Biegeschwingungen sind transversale Schwingungen. Solche Schwingungen werden in dem oben genannten und von der Anmelderin produzierten und vertriebenen "Liquiphanten" für die Füllstandsdetektion verwendet.

Die Erfindung sieht vor, dass mindestens die Ausgestaltung der drei Schwingkörper, deren Verbindungen untereinander und des Einspannbereichs mittels Bestimmungen und/oder Berechnungen derart aufeinander abgestimmt sind, dass die durch die Schwingungen der mechanisch schwingfähigen Einheit auf den Prozessanschluss wirkenden Reaktionskräfte und Reaktionsmomente möglichst Null sind und dass die Schwingungen der mechanisch schwingfähigen Einheit einen Schwingungsknoten in dem Einspannbereich aufweisen. Die Schwingkörper der mechanisch schwingfähigen Einheit und die Wahl des Einspannbereichs lassen sich durch entsprechende Berechnungen oder durch Versuche aufeinander abstimmen. Die Wahl des Einspannbereichs, also an welchem Bereich ein Schwingelement mit dem Prozessanschluss verbunden wird, ist deshalb relevant, weil dieses Schwingelement ebenfalls schwingt, d.h. es gibt Bereiche dieses Schwingelements, die ständig in Bewegung sind und die von daher nicht zur Verbindung mit dem Prozessanschluss dienen können, insofern der Einspannbereich in Ruhe bleiben soll. Durch die Verwendung von drei schwingfähigen Körpern ergibt sich eine Erhöhung der Freiheitsgrade, so dass eine Ausbalancierung der Kräfte und Momente sehr gut möglich ist. Das eine Schwingelement wird dort mit dem Prozessanschluss verbunden, wo das Element gerade einen Schwingungsknoten aufweist, ein Bereich also, der sich während der Schwingungen nicht bewegt. Die Erfindung hat somit den Vorteil, dass die Schwingungen sich nicht auf den Behälter auswirken.

Die Erfindung sieht vor, dass es sich bei den drei Schwingkörpern um einen Langstab mit einer Länge L, einer Masse M und einer Steifigkeit S, um einen ersten Kurzstab mit einer Länge L1, einer Masse M1 und einer Steifigkeit S1 und um einen zweiten Kurzstab mit einer Länge L2, einer Masse M2 und einer Steifigkeit S2 aufweist, dass der erste Kurzstab mit einem dem Prozess zugewandten Endbereich an einem dem Prozess zugewandten Endbereich des Langstabs mit dem Langstab verbunden ist, dass der zweite Kurzstab mit einem vom Prozess abgewandten Endbereich an einem vom Prozess abgewandten Endbereich des Langstabs mit dem Langstab verbunden ist, und dass der Langstab mindestens an einem Einspannbereich mit dem Prozessanschluss verbunden ist, dass die Kurzstäbe ein nicht mit dem Langstab verbundenes und somit frei schwingendes Ende aufweisen, und dass der Langstab mindestens den ersten Kurzstab koaxial umgibt.

Somit tritt zumindest nur der Langstab in Kontakt mit dem Medium und der erste Kurzstab schwingt stets mit den gleichen physikalischen Gegebenheiten. Diese Schwingung des ersten Kurzstabs wird somit auch nicht von Ansatz oder Korrosion des Langstabs beeinflusst. Die Grundidee ist, dass ein Einstab benutzt wird, der sich aus einem Langstab und zwei Kurzstäben zusammensetzt, wobei alle drei Einheiten schwingen können. Die Kurzstäbe sind jeweils an einem Ende mit dem Langstab verbunden und weisen ein freies Ende auf, das nicht mit dem Langstab verbunden ist und welches somit frei schwingen kann. Eine solche stab- oder rohrförmige Ausgestaltung vereinfacht die Berechnung der Momente und Kräfte und macht somit die konkrete Ausformung übersichtlicher. Die Verbindung der Kurzstäbe mit dem Langstab kann dabei direkt z.B. durch das Einschrauben der Kurzstäbe in eine entsprechend ausgestaltete Aussparung des Langstabs oder indirekt z.B. über ein federndes Element erfolgen. Die Verbindung kann weiterhin direkt am Abschluss des jeweiligen Endbereichs erfolgen oder an einem seitlichen Abschnitt davon. Es kann auch ein Kurzstab leicht über den Langstab hinausreichen. Weitere Ausgestaltungen sind möglich.

Eine vorteilhafte Ausgestaltung sieht vor, dass beide Kurzstäbe im Wesentlichen gleiche Länge, im Wesentlichen gleiche Masse bzw. um ihren Drehpunkt im Wesentlichen gleiches Massenträgheitsmoment und im Wesentlichen gleiche Steifigkeit aufweisen. Dies ist die einfachste Ausgestaltung, mit der die beiden Kurzstäbe gegensinnig schwingen und sich gerade kompensieren können.

Eine vorteilhafte Ausgestaltung beinhaltet, dass der erste und/oder der zweite Kurzstab mindestens eine Nut/Verjüngung aufweist, die mindestens die Schwingfrequenz der mechanisch schwingfähigen Einheit bestimmt. Eine solche Nut/Verjüngung wirkt sich auf die Drehsteifigkeit des entsprechenden Kurzstabs aus und erlaubt somit eine Einstellung der Resonanzfrequenz, die davon abhängig ist.

Eine weitere Ausgestaltung sieht vor, dass der Langstab beide Kurzstäbe koaxial umgibt. Eine solche mechanisch schwingfähige Einheit ist somit optimal in sich und gegenüber der Umwelt abgeschlossen und es kann auch kein Medium eindringen. Nach außen zeigt sich also nur eine schwingende Einheit. Die Ausgestaltung als Langstab oder vielmehr als Langrohr hat dabei den Vorteil, dass die durch das Material wirkenden Kräfte in den meisten Fällen - bis auf besondere Ausnahmen bei z.B. sehr starker Belastung - nicht zu einer Verformung führen.

Eine vorteilhafte Ausgestaltung beinhaltet, dass mindestens der zweite Kurzstab den Langstab koaxial umgibt. In Verbindung mit der Erfindung bedeutet dies, dass der Langstab am Prozess zugewandten Ende den ersten Kurzstab umfasst und selbst wiederum am anderen Ende vom zweiten Kurzstab umfasst wird. Der zweite Kurzstab kann dabei den Langstab über die Länge des Kurzstabes vollständig koaxial umgeben, er kann aber auch den Langstab nur teilweise umgeben und z.B. mit seinem vom Prozess abgewandten Ende über den Langstab hinausragen. Diese Ausgestaltung hat Vorteile in Hinsicht auf die fertigungstechnische Umsetzung. Zunächst wird der erste Kurzstab im Langstab befestigt. Dann wird der röhrenförmige Langstab, der beispielsweise am vom Prozess abgewandten Ende offen ist, mit dem zweiten Kurzstab verbunden. Der zweite Kurzstab kann dabei auch unten offen sein, so dass beispielsweise immer noch ein offener Zugang zum Innenraum des Langstabs bestehen bleibt. Dies ist ggf. für die Führung von Kabeln vorteilhaft.

Eine vorteilhafte Ausgestaltung beinhaltet, dass es sich bei dem Prozessanschluss um eine Röhre handelt, an welcher mindestens im Einspannbereich der Langstab befestigt ist. Der große Vorteil liegt darin, dass zumindest der vom Prozess abgewandte Abschnitt des Langstabs zwar schwingen kann, jedoch beispielsweise vor Ansatz, Korrosion oder allgemein vor dem Medium und den im Behälter herrschenden Prozessbedingungen geschützt ist. Weiterhin verkürzt sich somit der Bereich, der direkt im Behälter befindlich ist, der also dort "störend" wirkt.

Eine vorteilhafte Ausgestaltung sieht vor, dass sich die Antriebs-/Empfangseinheit zwischen dem dem Prozess zugewandten Endbereich des Langstabs und dem dem Prozess zugewandten Endbereich des ersten Kurzstabs befindet. Eine weitere vorteilhafte Ausgestaltung sieht vor, dass sich die Antriebs-/Empfangseinheit zwischen dem vom Prozess abgewandten Endbereichs des Langstabs und dem vom Prozess abgewandten Endbereich des zweiten Kurzstabs befindet. Der eine Kurzstab ist in beiden Ausgestaltungen also mit der Schwingungserregung-, bzw. -detektion verbunden und der jeweils andere Kurzstab dient als Kompensationsmasse oder -schwinger.

Eine Ausgestaltung beinhaltet, dass in der Antriebs-/Empfangseinheit mindestens ein piezo-elektrisches Element vorgesehen ist. Dies ist ein in der Vibronik übliche Ausgestaltung einer Antriebs-/Empfangseinheit.

Eine vorteilhafte Ausgestaltung sieht vor, dass das piezo-elektrisches Element in der Antriebs-/Empfangseinheit aus mindestens zwei Segmenten besteht, die in einander entgegengesetzter Richtung polarisiert sind, wobei die Polarisationsrichtungen parallel zu einer Rotationsachse der mechanisch schwingfähigen Einheit liegen. Ein solches Element hat den Vorteil, dass direkt ein Kippmoment erzeugt wird, da ein Segment durch eine anliegende Spannung gestaucht und das andere Segment gestreckt wird. Solch ein Kippmoment ist vor allem bei der Erzeugung von Biegeschwingungen der schwingfähigen Einheit erforderlich.

Die Erfindung wird anhand der nachfolgenden Zeichnungen näher erläutert. Es zeigt:
Fig. 1: den prinzipiellen Aufbau der mechanisch schwingfähigen Einheit,
Fig. 2: eine detailliertere Darstellung der mechanisch schwingfähigen Einheit mit der Piezoeinheit in Richtung des Prozesses,
Fig. 3: eine Ausgestaltung, in der sich die Piezoeinheit in der vom Prozess abgewandten Seite befindet, und
Fig. 4: eine Variation zur Ausgestaltung in Fig. 2.

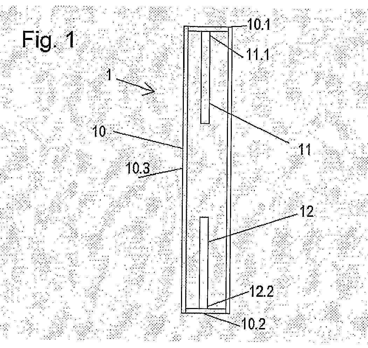

Fig. 1 zeigt den prinzipiellen Aufbau der mechanisch schwingfähigen Einheit 1. Der Langstab 10 ist hier so ausgestaltet, dass er die beiden Kurzstäbe 11, 12 koaxial umgibt. Alternative Ausgestaltungen sind jedoch möglich. Der erste Kurzstab 11 ist mit seinem dem Prozess zugewandten Endbereich 11.1 mit dem dem Prozess zugewandten Endbereich 10.1 des Langstabs 10 verbunden. Aufgrund der Nähe zum Medium ist es vorteilhaft, wenn der erste Kurzstab 11 im Langstab 10 angeordnet ist, da somit nur ein Bauteil - nämlich der Langstab 10 - in Kontakt mit dem Medium kommen kann. Am vom Prozess abgewandten Endbereich 10.2 des Langstabs 10 ist der Langstab mit dem zweiten Kurzstab 12 mit seinem vom Prozess abgewandten Endbereich 12.2 verbunden. Die anderen Endbereiche der Kurzstäbe 11, 12 sind jeweils freie Enden, die frei schwingen können. Im Einspannbereich 10.3 wird der Langstab 10 mit dem Prozessanschluss 2 verbunden. Dabei kann es sich beispielsweise um eine Muffe handeln, die in eine Öffnung des Behälters (nicht dargestellt) eingeschraubt wird. Durch die koaxiale Ausgestaltung kommt nur der Langstab 10 in Kontakt mit dem Medium (nicht dargestellt). So sind auch bei Ansatz des Mediums am Langstab 10 die beiden Kurzstäbe 11, 12 immer noch in der Lage, gegensinnige Schwingungen auszuführen und zu verhindern, dass Kräfte oder Momente auf die Einspannung wirken.

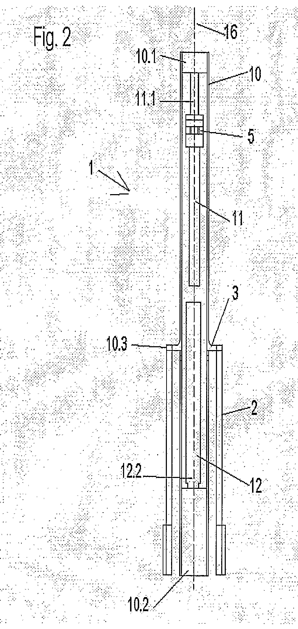

In Fig. 2 findet sich eine detailliertere Ausgestaltung der mechanisch schwingfähigen Einheit 1. Die Antriebs-/Empfangseinheit 5 befindet sich in Richtung des Prozesses zwischen dem dem Prozess zugewandten Endbereich 11.1 des ersten Kurzstabes 11 und dem entsprechenden Endbereich 10.1 des Langstabs 10. Schematisch ist die Antriebs-/Empfangseinheit 5 hier als piezo-elektrisches Element dargestellt, welches über mindestens zwei Segmente mit einander entgegengesetzter Polarisation verfügt. Diese Polarisationen sind parallel zu einer Rotationsachse 16 der schwingfähigen Einheit 1. Eine solche Ausgestaltung hat den Vorteil, dass sich bei Anlegen einer Spannung an dieses piezo-elektrische Element ein Segment zusammenzieht, während sich das andere ausdehnt. Somit wird direkt eine Kippbewegung erzeugt, die zu Biegeschwingungen der mechanisch schwingfähigen Einheit 1 führt. Der Langstab 10 wird am Einspannbereich 10.3 mit dem Prozessanschluss 2 verbunden. Dieser Anschluss 2 ist mit einem Abschlussstück 3 verbunden, so dass kein Material in den Innenbereich der mechanisch schwingfähigen Einheit 1 eindringen kann. In der Abbildung ist auch gut zu erkennen, dass nur der Bereich zwischen dem Einspannbereich 10.3 und dem dem Prozess zugewandten Endbereich 10.1 des Langstabs 10 mit dem Prozess in Verbindung treten kann, während jedoch die gesamte Länge des Langstabs 10 schwingfähig ist.

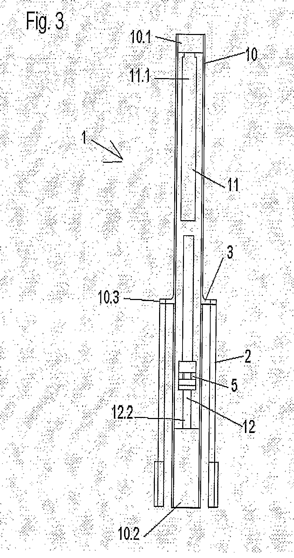

In Fig. 3 findet sich eine zur Fig. 2 entsprechende Ausgestaltung, in welcher sich die Antriebs-/Empfangseinheit 5 zwischen dem vom Prozess abgewandten Endbereich 12.2 des zweiten Kurzstabs 12 und dem entsprechenden Endbereich 10.2 des Langstabs 10 befindet.

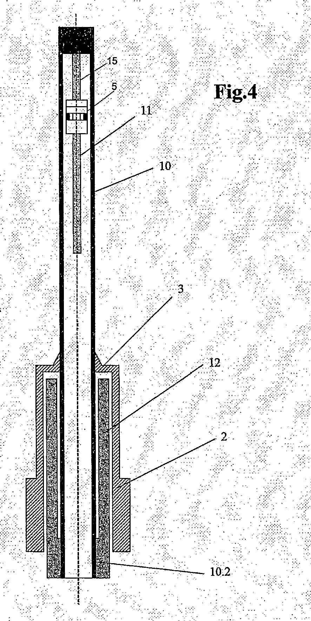

In der Fig. 4 ist eine alternative Ausgestaltung zur Fig. 2 dargestellt; die Antriebs-/Empfangseinheit 5 befindet sich also im ersten Kurzstab 11. Der zweite Kurzstab 12 ist hier als Rohr ausgebildet, dessen Innendurchmesser größer als der Außendurchmesser des Langstabes 10 ist. Somit kann der zweite Kurzstab 12 den Langstab 10 koaxial umfassen. Wird ein solcher Kurzstab 12 mit dem Langstab 10 kraftschlüssig verbunden, so kann der unverbundene und dem Prozess zugewandte Teil - also quasi das freie Ende - frei schwingen. Durch die spezielle Ausgestaltung umgibt der zweite Kurzstab 12 den Langstab 10 koaxial - der Langstab 10 wird quasi an seinem vom Prozess abgewandten Ende von einem Becher (der ggf. unten auch offen sein kann) umschlossen -, der wiederum den ersten Kurzstab 11 koaxial umgibt. Dies hat bei der Fertigung Vorteile. Auch in dieser Ausführung führen bei einer entsprechenden Abstimmung die beiden Kurzstäbe 11, 12 und der Langstab 10 gegensinnige Schwingungen aus, bei denen die auf das Abschlussstück 3 und den Anschluss 2 wirkenden Kräfte und Drehmomente entgegengesetzt gleich groß sind und somit keine Reaktionskräfte und Reaktionsmomente auf das Anschlussstück 3 und den Anschluss 2 wirken. Weiterhin ist in dieser Abbildung Fig. 4 zu erkennen, dass sich die Nut/Verjüngung 15 auch über einen größeren Abschnitt erstrecken kann. Der erste Kurzstab 11 besteht aus zwei Abschnitten: ein Abschnitt befindet sich zwischen der Antriebs-/Empfangseinheit 5 und der Verbindungsstelle von Langstab 10 und Kurzstab 11 und der zweite Abschnitt befindet sich auf der anderen Seite der Antriebs-/Empfangseinheit 5. Der Abschnitt in Richtung des Prozesses hat einen geringeren Durchmesser, ist also eine ausgedehnte Verjüngung 5.

### Bezugszeichenliste

- 1: Mechanisch schwingfähige Einheit
- 2: Prozessanschluss
- 3: Abschlussstück
- 5: Antriebs-/Empfangseinheit
- 10: Langstab
- 10.1: Dem Prozess zugewandter Endbereich
- 10.2: Vom Prozess abgewandter Endbereich
- 10.3: Einspannbereich
- 11: Erster Kurzstab
- 11.1: Dem Prozess zugewandter Endbereich
- 12: Zweiter Kurzstab
- 12.2: Vom Prozess abgewandter Endbereich
- 15: Nut/Verjüngung
- 16: Rotationsachse

## Patentansprüche

1. Feldgerät zur Bestimmung und/oder Überwachung mindestens einer Prozessgröße eines Mediums in einem Behälter,
mit mindestens einer mechanisch schwingfähigen Einheit (1),
wobei die mechanisch schwingfähige Einheit (1) über einen Prozessanschluss (2) mit dem Behälter verbindbar ist,
und
mit mindestens einer Antriebs-/Empfangseinheit (5),
wobei die Antriebs-/Empfangseinheit (5) die mechanisch schwingfähige Einheit (1) zu Schwingungen anregt, bzw. wobei die Antriebs-/Empfangseinheit (5) die Schwingungen der mechanisch schwingfähigen Einheit (1) detektiert,
**dadurch gekennzeichnet,**
**dass** die mechanisch schwingfähige Einheit (1) mindestens drei Schwingkörper (10, 11, 12) aufweist,
**dass** die Schwingkörper stab- oder röhrenförmig ausgestaltet sind,
**dass** die drei Schwingkörper (10, 11, 12) Schwingungen ausführen, die die Antriebs-/Empfangseinheit (5) erzeugt bzw. detektiert,
**dass** es sich bei den Schwingungen der mechanisch schwingfähigen Einheit (1) um Biegeschwingungen handelt,
**dass** es sich bei den drei Schwingkörpern (10, 11, 12) um einen Langstab (10) mit einer Länge (L), einer Masse (M) und einer Steifigkeit (S), um einen ersten Kurzstab (11) mit einer Länge (L1), einer Masse (M1) und einer Steifigkeit (S1) und um einen zweiten Kurzstab (12) mit einer Länge (L2), einer Masse (M2) und einer Steifigkeit (S2) handelt,
**dass** der erste Kurzstab (11) mit einem dem Prozess zugewandten Endbereich (11.1) an einem dem Prozess zugewandten Endbereich des Langstabs (10.1) mit dem Langstab (10) verbunden ist,
**dass** der zweite Kurzstab (12) mit einem vom Prozess abgewandten Endbereich (12.2) an einem vom Prozess abgewandten Endbereich des Langstabs (10.2) mit dem Langstab (10) verbunden ist,
**dass** die Kurzstäbe (11, 12) ein nicht mit dem Langstab (10) verbundenes und somit frei schwingendes Ende aufweisen,
**dass** der Langstab (10) mindestens den ersten Kurzstab (11) koaxial umgibt,
**dass** der Langstab (10) mindestens an einem Einspannbereich (10.3) mit dem Prozessanschluss (2) verbunden ist,
wobei mindestens die Ausgestaltung der drei Schwingkörper (10, 11, 12), deren Verbindungen untereinander und des Einspannbereichs (10.3) mittels Bestimmungen und/oder Berechnungen derart aufeinander abgestimmt sind, dass die Schwingungen der mechanisch schwingfähigen Einheit einen Schwingungsknoten in dem Einspannbereich aufweisen
und **dass** die durch die Schwingungen der mechanisch schwingfähigen Einheit (1) auf den Prozessanschluss (2) wirkenden Reaktionskräfte und Reaktionsmomente möglichst Null sind.

2. Feldgerät nach Anspruch 1,
**dadurch gekennzeichnet,**
**dass** beide Kurzstäbe (11, 12) im Wesentlichen gleiche Länge, im Wesentlichen gleiche Masse bzw. um ihren Drehpunkt im Wesentlichen gleiches Massenträgheitsmoment und im Wesentlichen gleiche Steifigkeit aufweisen.

3. Feldgerät nach Anspruch 1 oder 2,
**dadurch gekennzeichnet,**
**dass** der erste (11) und/oder der zweite Kurzstab (12) mindestens eine Nut/Verjüngung (15) aufweist, die mindestens die Schwingfrequenz der mechanisch schwingfähigen Einheit (1) bestimmt.

4. Feldgerät nach Anspruch 1 ,
**dadurch gekennzeichnet,**
**dass** mindestens der zweite Kurzstab (12) den Langstab (10) koaxial umgibt.

5. Feldgerät nach Anspruch 1,
**dadurch gekennzeichnet,**
**dass** der Langstab (10) beide Kurzstäbe (11, 12) koaxial umgibt.

6. Feldgerät nach Anspruch 1,
**dadurch gekennzeichnet,**
**dass** es sich bei dem Prozessanschluss (2) um eine Röhre handelt, an welcher mindestens im Einspannbereich (10.3) der Langstab (10) befestigt ist.

7. Feldgerät nach Anspruch 1,
**dadurch gekennzeichnet,**
**dass** sich die Antriebs-/Empfangseinheit (5) zwischen dem dem Prozess zugewandten Endbereich (10.1) des Langstabs (10) und dem dem Prozess zugewandten Endbereich (11.1) des ersten Kurzstabs (11) befindet.

8. Feldgerät nach Anspruch 1,
**dadurch gekennzeichnet,**
**dass** sich die Antriebs-/Empfangseinheit (5) zwischen dem vom Prozess abgewandten Endbereich (10.2) des Langstabs (10) und dem vom Prozess abgewandten Endbereich (12.2) des zweiten Kurzstabs (12) befindet.

9. Feldgerät nach Anspruch 1, 7 oder 8,
**dadurch gekennzeichnet,**
**dass** in der Antriebs-/Empfangseinheit (5) mindestens ein piezo-elektrisches Element vorgesehen ist.

10. Feldgerät nach Anspruch 9,
**dadurch gekennzeichnet,**
**dass** das piezo-elektrisches Element in der Antriebs-/Empfangseinheit (5) aus mindestens zwei Segmenten besteht, die in einander entgegengesetzter Richtung polarisiert sind, wobei die Polarisationsrichtungen parallel zu einer Rotationsachse (16) der mechanisch schwingfähigen Einheit (1) liegen.

## Claims

1. Field device for determining and/or monitoring at least one process variable of a medium in a vessel with at least one unit capable of vibrating mechanically (1),
wherein the unit capable of vibrating mechanically (1) can be connected to the vessel via a process connection (2),
and
with at least one drive/reception unit (5),
wherein the drive/reception unit (5) causes the unit capable of vibrating mechanically (1) to vibrate, or wherein the drive/reception unit (5) detects the vibrations of the unit capable of vibrating mechanically (1),
**characterized in that**
the unit capable of vibrating mechanically (1) has at least three vibration bodies (10, 11, 12),
**in that** the vibration bodies have a rod-like or tubular design,
**in that** the three vibration bodies (10, 11, 12) perform vibrations which the drive/reception unit (5) generates or detects,
**in that** the vibrations of the mechanical unit capable of vibrating mechanically (1) are flexural vibrations,
**in that** the three vibration bodies (10, 11, 12) comprise a long rod (10) with a length (L), a mass (M) and a rigidity (S); a first short rod (11) with a length (L1), a mass (M1) and a rigidity (S1); and a second short rod (12) with a length (L2), a mass (M2) and a rigidity (S2),
**in that** the first short rod (11) is connected, with an end section (11.1) facing towards the process, to the long rod (10) at an end section of the long rod (10.1) facing towards the process,
**in that** the second short rod (12) is connected, with an end section (12.1) facing away from the process, to the long rod (10) at an end section of the long rod (10.2) facing away from the process,
**in that** the short rods (11, 12) have an end that is not connected to the long rod (10), and is therefore a freely vibrating end,
**in that** the long rod (10) coaxially surrounds at least the first short rod (11),
**in that** the long rod (10) is connected to the process connection (2) at least at a clamping area (10.3),
wherein at least the designs of the three vibration bodies (10, 11, 12), their interconnections and the clamping area (10.3) are arranged by way of specifications and/or calculations in such a way that the vibrations of the unit capable of vibrating mechanically have a vibration node in the clamping area and **in that** the reactive forces and reaction moments acting on the process connection (2) as a result of the vibrations of the unit capable of vibrating mechanically (1) are as close to zero as possible.

2. Field device as claimed in Claim 1,
**characterized in that**
the two short rods (11, 12) have essentially the same length, essentially the same mass or essentially the same moment of inertia around their centre of rotation, and essentially the same rigidity.

3. Field device as claimed in Claim 1 or 2,
**characterized in that**
the first (11) and/or the second short rod (12) has at least one groove/taper (15), which at least determines the vibration frequency of the unit capable of vibrating mechanically (1).

4. Field device as claimed in Claim 1,
**characterized in that**
at least the second short rod (12) coaxially surrounds the long rod (10).

5. Field device as claimed in Claim 1,
**characterized in that**
the long rod (10) coaxially surrounds the two short rods (11, 12).

6. Field device as claimed in Claim 1,
**characterized in that**
the process connection (2) is a tube to which the long rod (10) is attached at least in the clamping area (10.3).

7. Field device as claimed in Claim 1,
**characterized in that**
the drive/reception unit (5) is located between the end area (10.1) of the long rod (10) facing towards the process and the end area (11.1) of the first short rod (11) facing towards the process.

8. Field device as claimed in Claim 1,
**characterized in that**
the drive/reception unit (5) is located between the end area (10.2) of the long rod (10) facing away from the process and the end area (12.2) of the second short rod (12) facing away from the process..

9. Field device as claimed in Claim 1, 7 or 8,
**characterized in that**
at least one piezoelectric element is provided in the drive/reception unit (5).

10. Field device as claimed in Claim 9,
**characterized in that**
the piezoelectric element in the drive/reception unit (5) consists of at least two segments, which are polarised in opposite directions, wherein the polarisation directions are parallel to an axis of rotation (16) of the unit which is capable of vibrating mechanically (1).

## Revendications

1. Appareil de terrain destiné à la détermination et/ou à la surveillance d'une grandeur process d'un produit dans un réservoir,
avec au moins une unité apte à vibrer mécaniquement (1),
l'unité apte à vibrer mécaniquement (1) pouvant être reliée par l'intermédiaire d'un raccord process (2) avec le réservoir,
et
avec au moins une unité d'entraînement / de réception (5),
l'unité d'entraînement / de réception (5) excitant l'unité apte à vibrer mécaniquement (1) en vibrations, ou l'unité d'entraînement / de réception (5) détectant les vibrations de l'unité apte à vibrer mécaniquement (1),
**caractérisé**
**en ce que** l'unité apte à vibrer mécaniquement (1) comporte au moins trois corps vibrants (10, 11, 12),
**en ce que** les corps vibrants sont conçus en forme de tige ou de tube,
**en ce que** les trois corps vibrants (10, 11, 12) exécutent des vibrations que l'unité d'entraînement / de réception (5) génère ou détecte,
**en ce que**, concernant les vibrations de l'unité apte à vibrer mécaniquement (1), il s'agit de vibrations de flexion,
**en ce que**, concernant les trois corps vibrants (10, 11, 12), il s'agit d'une tige longue (10) de longueur (L), de masse (M) et de rigidité (S), d'une première tige courte (11) de longueur (L1), de masse (M1) et de rigidité (S1) et d'une deuxième tige courte (12) de longueur (L2), de masse (M2) et de rigidité (S2), en ce que la première tige courte (11) est reliée avec une zone d'extrémité (11.1), faisant face au process, avec la tige longue (10) au niveau d'une zone d'extrémité de la tige longue (10.1) faisant face au process,
**en ce que** la deuxième tige courte (12) est reliée avec une zone d'extrémité (12.2), située à l'opposé du process, avec la tige longue (10) au niveau d'une zone d'extrémité de la tige longue (10.2) située à l'opposé du process,
**en ce que** les tiges courtes (11, 12) comportent une extrémité non reliée avec la tige longue (10), vibrant ainsi librement,
**en ce que** la tige longue (10) entoure coaxialement au moins la première tige courte (11),
**en ce que** la tige longue (10) est reliée au moins au niveau d'une zone de serrage (10.3) avec le raccord process (2),
au moins la conception des trois corps vibrants (10, 11, 12), leurs liaisons entre eux et la zone de serrage (10.3) étant assortis au moyen de spécifications et/ou de calculs de telle sorte que les vibrations de l'unité apte à vibrer mécaniquement présentent un noeud de vibration dans la zone de serrage
et de telle sorte que les forces de réaction et les moments de réactions agissant par les vibrations de l'unité apte à vibrer mécaniquement (1) sur le raccord process (2) sont aussi près de zéro que possible.

2. Appareil de terrain selon la revendication 1,
**caractérisé**
**en ce que** les deux tiges courtes (11, 12) présentent pour l'essentiel la même longueur, pour l'essentiel la même masse ou pour l'essentiel le même moment d'inertie autour de leur centre de rotation, et pour l'essentiel la même rigidité.

3. Appareil de terrain selon la revendication 1 ou 2,
**caractérisé**
**en ce que** la première (11) et/ou la deuxième tige courte (12) présentent au moins une rainure / un rétrécissement (15), qui détermine au moins la fréquence de vibration de l'unité apte à vibrer mécaniquement (1).

4. Appareil de terrain selon la revendication 1,
**caractérisé**
**en ce qu'**au moins la deuxième tige courte (12) entoure coaxialement la tige longue (10).

5. Appareil de terrain selon la revendication 1,
**caractérisé**
**en ce que** la tige longue (10) entoure coaxialement les deux tiges courtes (11, 12).

6. Appareil de terrain selon la revendication 1,
**caractérisé**
**en ce que** concernant le raccord process (2), il s'agit d'un tube auquel est fixé au moins une zone de serrage (10.3) de la tige longue (10).

7. Appareil de terrain selon la revendication 1,
**caractérisé**
**en ce que** l'unité d'entraînement / de réception (5) se trouve entre la zone d'extrémité (10.1) de la tige longue (10) faisant face au process et la zone d'extrémité (11.1) de la première tige courte (11) faisant face au process.

8. Appareil de terrain selon la revendication 1,
**caractérisé**
**en ce que** l'unité d'entraînement / de réception (5) se trouve entre la zone d'extrémité (10.2) de la tige longue (10), située à l'opposé du process, et la zone d'extrémité (12.2) de la deuxième tige courte (12) située à l'opposé du process.

9. Appareil de terrain selon la revendication 1, 7 ou 8,
**caractérisé**
**en ce qu'**est prévu dans l'unité d'entraînement / de réception (5) au moins un élément piézo-électrique.

10. Appareil de terrain selon la revendication 9,
**caractérisé**
**en ce que** l'élément piézo-électrique intégré dans l'unité d'entraînement / de réception (5) est constitué d'au moins deux segments, qui sont polarisés en direction opposée, les directions de polarisation étant parallèles à un axe de rotation (16) de
l'unité apte à vibrer mécaniquement (1).
